# EUROPEAN PATENT SPECIFICATION

(11) **EP 0 567 839 B1**
(45) Date of publication and mention of the grant of the patent: **15.03.1995**
(21) Application number: 93105986.9
(22) Date of filing: 13.04.1993
(51) Int. Cl.: G01F 23/00

(54) **Electronic device for damping the fuel level indicator instrument in a vehicle tank**
Elektronische Dämpfungseinrichtung für Flüssigkeitsstandanzeige eines Kraftfahrzeugtankes
Dispositif électronique d'amortissement pour un indicateur de niveau d'un réservoir de voiture

(30) Priority: 28.04.1992 IT TO920362
(43) Date of publication of application: 03.11.1993
(73) Proprietor: FIAT AUTO S.p.A., 10135 Torino (IT)
(72) Inventor: Di Nunzio, Vittorio, I-10100 Torino (IT); Sterza, Gianni, I-10100 Torino (IT)
(74) Representative: Lotti, Giorgio

(56) References cited:
- EP-A- 0 167 674
- EP-A- 0 275 240
- FR-A- 2 646 907
- GB-A- 2 122 750

## Description

This invention relates to an electronic damping device to be fitted to an apparatus of currently used type for indicating the fuel level in a vehicle tank.

As is well known, the instrumentation provided on automotive vehicles consists in most cases of instruments based on electrical operating principles.

An instrument comprising a transducer and an analog indicator is widely used for indicating the fuel level in vehicle tanks. Such an instrument is easy to read, is highly reliable and is of low cost.

Most transducers used for fuel level measurement comprise an electrical resistor in the form of a conductor spirally wound on a straight support having a length proportional to the tank height and positioned perpendicularly within the tank. The electrical connection facing the base is carried on a sliding contact which is free to move along the entire support but is rigid with a float. The result is that an amount of resistance dependent on the position of the sliding contact or slider is connected into the circuit, this resistance value being generally inversely related to the fuel level by virtue of the connection to the float and hence by the effect of the Archimedes thrust when liquid is present.

Other transducers of the so-called arm type are also known, which convert the position of an arm moved by a float into a rotation of a potentiometer. The invention described herein can be associated with any type of gasoline level transducer, whether of the described types or of other types based on analogous principles.

The indicator instruments themselves mostly consist of pointer indicators operated by the interaction between permanent magnets and variable electrical fields generated by coils through which electric current flows. Instruments comprising two coils of cross-coil configuration are widely used because of their insensitivity to feed voltage variations.

Such indicator instruments, fed with the battery voltage, can be directly connected to the aforesaid analog transducers, with considerable advantages in that no calibration or mutual compensation for temperature and/or feed voltage variation is required.

As however the fuel within the tank is subjected to forces which tend to change its position, such as when travelling up or down an incline or around bends, or when under acceleration or sudden deceleration, the consequent splashing affects the float rigid with the transducer.

This results in considerable oscillation of the pointer on the indicator instrument, with consequent annoyance to the driver in that he does not known the true quantity of fuel still available.

This problem is solved by damping the fuel level acquisition system using an object, a principle or a device the effect of which, noted by the driver, is to oppose any too sudden variation in the instrument pointer. The methods used to obviate the phenomenon are basically of mechanical or electrical type.

Mechanical solutions comprise either incorporating silicone friction devices into the moving parts in order to introduce controlled friction, or encapsulating the float in a container to which the liquid has access via a suitably sized hole.

Solutions of the first type involve the serious risk of breakage of the component capsules of the friction devices with resultant dispersion of foreign matter into fuel, whereas solutions of the second type, although considerably reducing the phenomenon, do not eliminate it totally. For this, small-dimension holes would be required, but these would present filling problems and could be easily clogged by the debris present on the tank base.

Currently known electronic solutions comprise connecting a low-pass filter circuit between the transducer and the indicator.

Although the use of active electronic low-pass filter circuits allows transfer functions of any type to be implemented, they result in the loss of mutual compensation for feed voltage and/or temperature variations arising within the instrument-transducer circuit.

In addition these active circuits have to be set in order to assign the correct gain value for each transducer-indicator pair, they are strongly affected by battery voltage variations, and because they unlatch the iteration of the two original components they do not faithfully reproduce the float characteristic.

In FR-A-2646907 and EP-A-0167674, a damping circuit connected to the transducer output is switched out of circuit during an initial period after switching on the ignition, so that a direct reading is available. In GB-A-2122750, signal values are averaged at longer time intervals when the liquid surface is unstable than when it is stable. In EP-A-0275240, the effects of agitation of the fuel in the tank is obviated by calculation of weighted average values.

An object of the present invention is to provide an apparatus for indicating the fuel level in a vehicle tank of the type and for the applications stated heretofore, which reduces the problem of oscillation of the indicator instrument to a very low level, and which allows temperature and/or feed voltage variations to be directly compensated between the transducer and the indicator.

A further object of the present invention is to provide an apparatus which does not require setting, which is insensitive to feed voltage variations, and which maintains the float transfer characteristics unaltered.

These objects are attained by an electronic damping device for an apparatus for indicating the fuel level in a vehicle tank, essentially comprising an electrical level transducer located in said fuel-containing vehicle tank, an indicator device controlled by an electrical voltage and an electronic circuit comprising an input towards said transducer and an output towards said indicator device, wherein said electronic circuit comprises a first static switch connected in series between said input and said output, a second static switch which connects to said input a resistive-capacitive network consisting of a resistor and a capacitor connected in series, a third static switch which connects said capacitor to said output via an adaptive node, and a square wave generator with an ON period which is short relative to its OFF period, said square wave generator being connected to the control electrodes of said static switches in such a manner as to close said first and said second static switch and to open said third static switch during the ON stage and, complementarily, to open said first and said second static switch and to close said third static switch during the OFF stage.

Further advantageous characteristics form the subject of the dependent claims.

The structural and operational characteristics and advantages of an apparatus according to the present invention will be more apparent from the description thereof given by way of non-limiting example with reference to the accompanying drawings, in which:
Figure 1 is an outline electrical schematic of one embodiment of an apparatus according to the present invention;
Figure 2 is an outline electrical schematic of the apparatus of Figure 1 provided with a differentiating stage;
Figure 3 is an outline electrical schematic of the apparatus of Figure 2 provided with a control circuit for a fuel reserve indicator lamp;
Figure 4 is an outline electrical schematic of the apparatus of Figure 3 provided with a further connection circuit between the fuel reserve lamp and the indicator device; and
Figure 5 is an outline electrical schematic of the apparatus of Figure 4 provided with a feedback circuit.

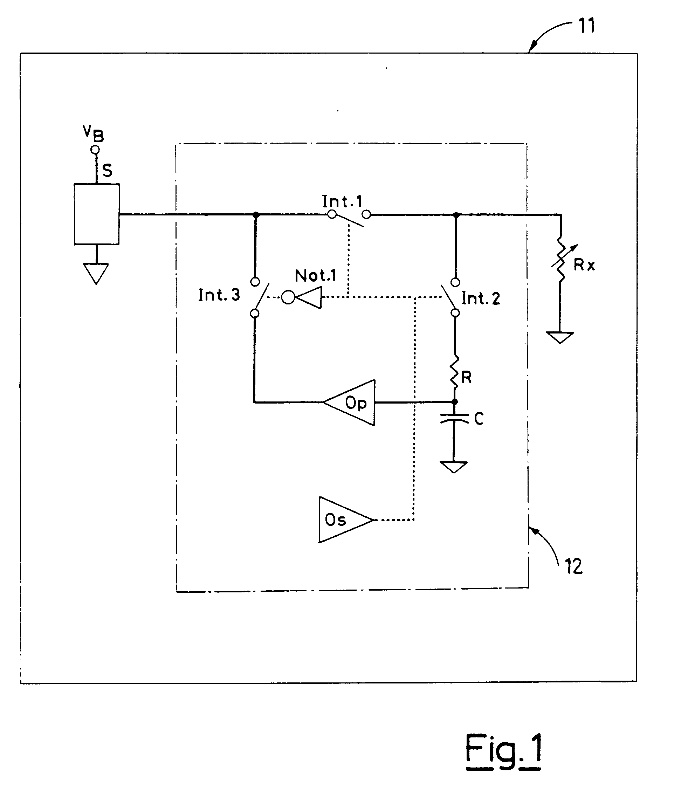

Figure 1 shows an apparatus 11 comprising an electronic circuit indicated overall by 12, an indicator device S and a transducer Rx.

The transducer Rx is of any known type comprising an electrical resistor which varies with fuel level.

The indicator device S consists of two cross-coils with their axes at 90° to each other. The two magnetic fields generated by the currents which operate the indicator give rise to a resultant force which acts on a suitably magnetized armature.

This latter, free to rotate about an axis perpendicular to the plane in which the magnetic field vectors lie, is rigid with a pointer which by moving along a graduated quadrant provides a visual indication on the basis of the voltage applied to the indicator terminals. The indicator device S is powered by the direct current battery voltage Vb.

The electronic circuit 12 comprises three static switches Int-1, Int-2 and Int-3, a resistive-capacitive network composed of a resistor R and a capacitor C, an adaptive node Op and a square wave generator Os.

The generator Os generates a square wave which by way of non-limiting example lasts about 15 ms with an ON time of 1 ms (1/15 duty cycle). This signal is fed to the control electrode of Int-1 and Int-2 and, after electrical inversion by a NOT element Not-1, to control electrode of Int-3.

During its ON time, Int-1, located in the connection line between the transducer Rx and the indicator device S, is closed and the indicator S is connected electrically to the transducer Rx for a time of 1 ms.

Simultaneously Int-2, which connects the transducer Rx to the resistive-capacitive network RC, is closed and the capacitor C charges through the resistor R. The voltage across the capacitor C is fed to the adaptive node Op which transfers it unaltered to Int-3, which is open.

At the end of the ON time, Int-1 and Int-2 open, whereas Int-3 closes. In this manner the indicator support element is controlled by the voltage to which the capacitor C has been charged.

The circuit 12 operates as follows.

Under stationary conditions and during the ON time the indicator S is independent of the electronic circuit 12 and its indication represents a direct reading as it is connected to the transducer Rx. During the OFF stage the voltage memorized by the capacitor C is applied to the indicator S.

Consequently when under stationary conditions the same voltage is applied across the indicator S during both the ON and OFF stages. As the fuel level and consequently the voltage across the transducer Rx vary, the electronic circuit 12 undergoes two totally different types of behaviour, depending on the dynamics of the variation.

If the level varies over a long time period, the capacitor C is able to follow with only negligible difference the variation in the voltage across the transducer Rx with time, this voltage therefore being faithfully reproduced by the indicator S.

If however the level varies over a short time period, the voltage across the transducer Rx varies at a rate faster than that which can be followed by the capacitor C. In this respect the charging and discharging of the capacitor C are hindered not only by the time constant due to the series connection with the resistor R, but in particular by the fact that the capacitor is connected for only a fraction of the total time.

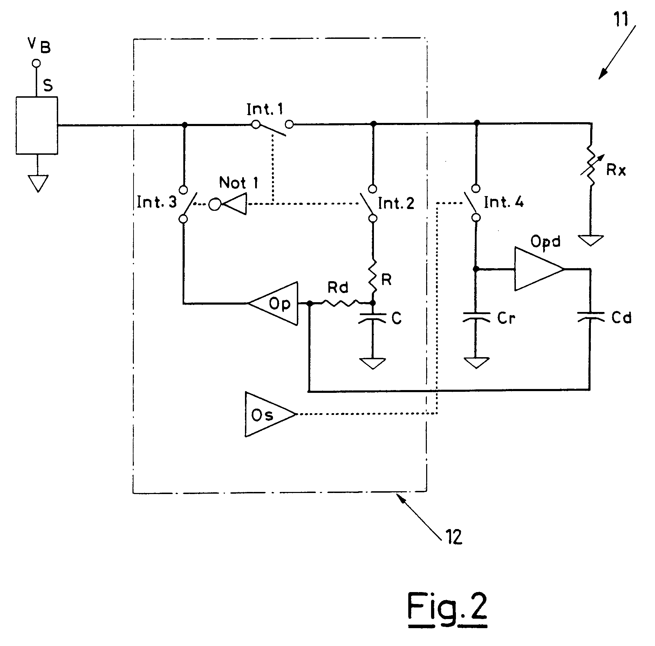

Hence for practical purposes the electronic circuit 12 displays a time constant much greater than that of the resistive-capacitive network RC without the need to use large-capacity capacitors, with all the practical and cost problems which this would involve. Usefully, in the embodiment of Figure 2 the circuit 12 further comprises a differentiating stage controlled by the transducer Rx via a fourth static switch Int-4. Said differentiating stage consists of a capacitor Cd and resistor Rd connected in series, and transfers the differentiation effect to the input of the adaptive node Op. The control electrode of the switch Int-4 is directly connected to the output of the square wave generator Os, as in the case of the switches Int-1 and Int-2.

In this manner during the ON stage, the rapid feed voltage variations reach not only the terminals of the indicator S but also the filter capacitor Cd. The time derivative of these variations therefore reaches the adaptive node Op, which in reality has become an adder node.

The addition of the differentiating stage is effective when the intrinsic damping of the float of the transducer Rx is adequate, such that the inherent float variations are much slower than the battery variations.

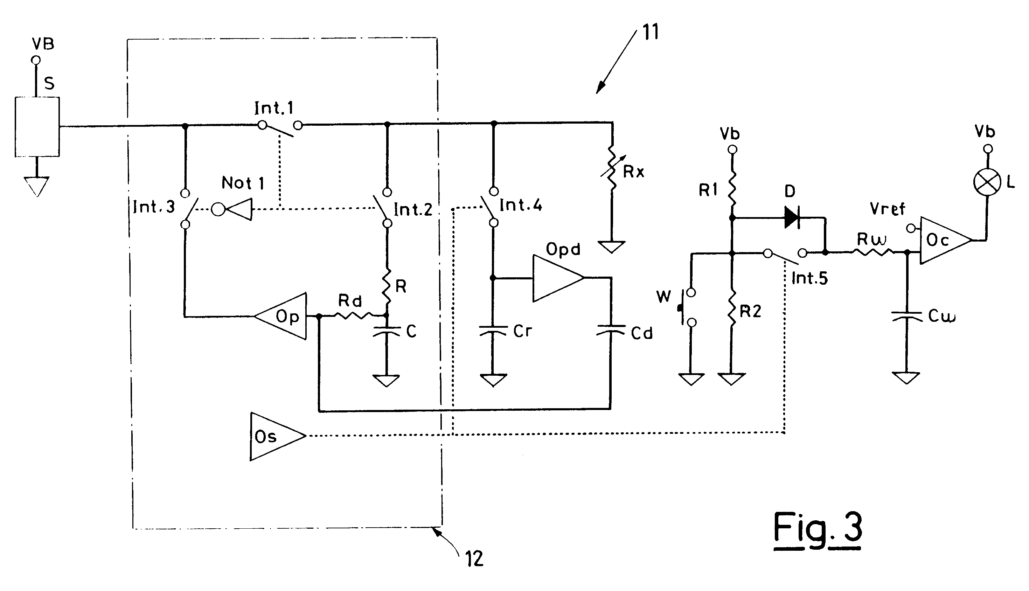

Advantageously, in the embodiment of Figure 3 a "reserve" warning light L is also connected to the electronic circuit 12. The contact W contained within the fuel level transducer is connected to the voltage divider node formed frog two resistors R1 and R2. The voltage divider R1-R2 is connected to one of the two inputs of a comparator Oc via a fifth static switch Int-5 in parallel with a diode D and a filter network consisting of a resistor Rw and a capacitor Cw. The other input of the comparator Oc is connected to a reference voltage Vref, and the output of Oc directly controls the lighting of the lamp L. The control electrode of the switch Int-5 is also directly connected to the output of the square wave generator Os.

The contact W, which closes when the fuel level falls below a certain predetermined signalling threshold, connects the node of the voltage divider R1-R2 to earth when closed, with the result that the capacitor Cw discharges slowly by the effect of the time constant provided by the resistor Rw and increased by the fact that the capacitor Cw is connected to the voltage divider R1-R2 only for a fraction of the total time. When the voltage across Cw falls below the threshold value Vref, the comparator Oc feeds a current to the warning lamp L, which lights.

The filter circuit Rw-Cw connected to the comparator Oc and having high hysteresis, not shown for simplicity, determines a delay in the lighting and extinguishing of the lamp L relative to the closure and opening of the contact W. This prevents repeated lighting and extinguishing of the lamp L resulting from the vehicle movement when the level in the transducer is around the reserve indicating threshold.

The presence of the diode D makes said delays substantially different in the sense that extinguishing takes place with less delay than lighting. This is advantageous under certain conditions such as when parking the vehicle on an incline, with the fuel only slightly above the reserve level. Under these conditions, on turning the key the warning lamp could light unjustly, however when the vehicle moves the level becomes correct, the contact reopens and the lamp is extinguished rapidly.

A further advantage of different delays is that in typical town driving, the initial lighting of the reserve lamp would correspond in practice to the theoretical threshold for static operation, whereas if this function is not provided the lamp can light even with 5-10 litres of fuel above the reserve level.

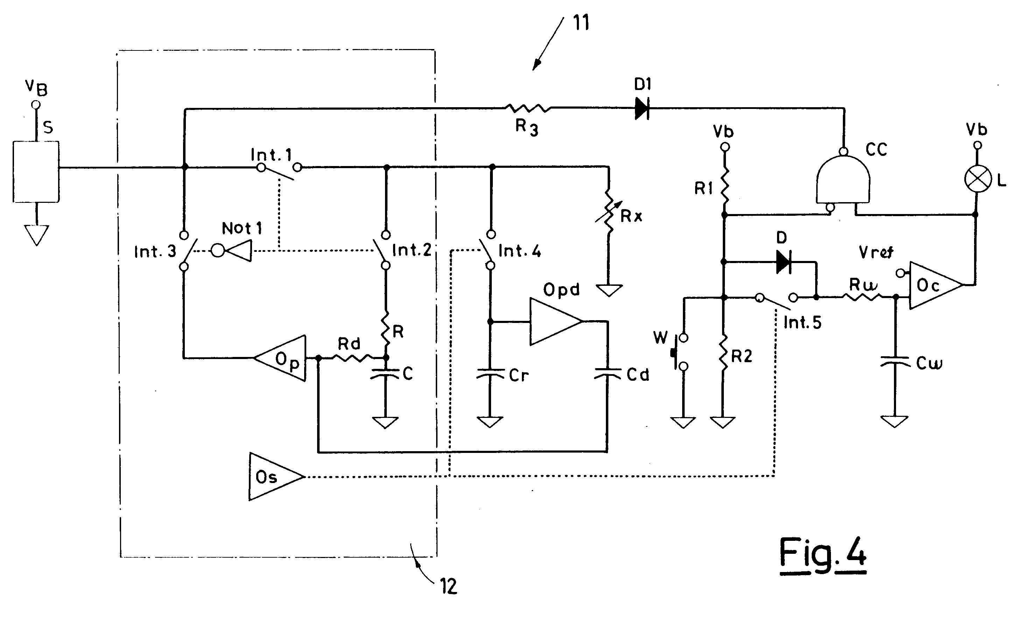

Usefully, in the embodiment shown in Figure 4 the two inputs of a combining circuit CC are connected to the electrode of the warning lamp L and to the node of the voltage divider R1-R2, whereas the output of the circuit CC is connected to the indicator S via a second diode D2 and a suitable resistor R3.

The logic function performed by the circuit CC is such as to prevent the pointer of the indicator S from reaching the lower end of the scale if the warning lamp is not alight. This prevents absurd transient situations occurring in which the indicator S is in the lower end-of-scale position and hence an empty tank situation, without the reserve lamp lighting.

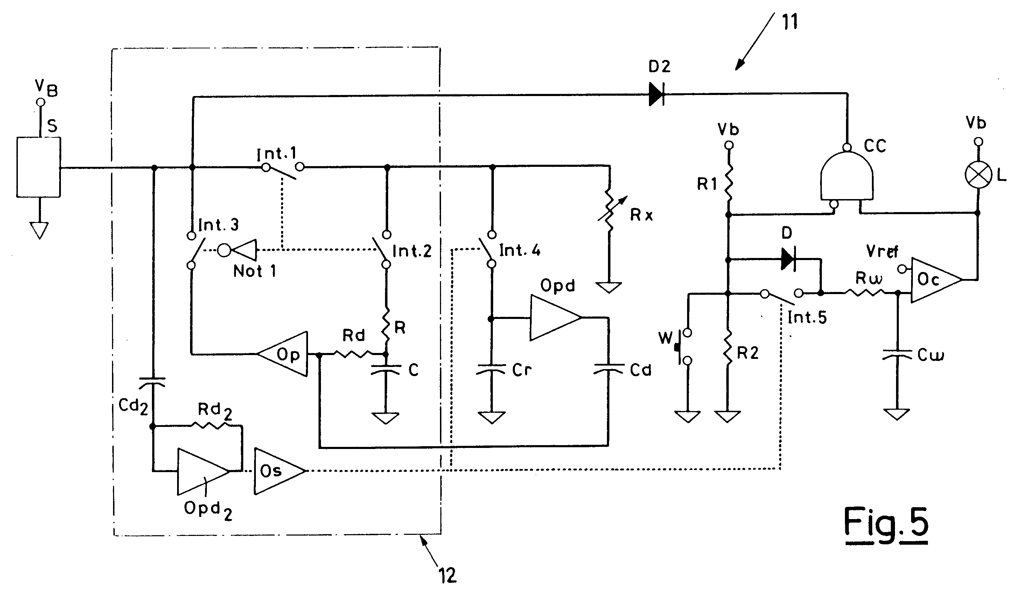

Preferably, in the embodiment shown in Figure 5 the square wave generator Os is controlled with feedback from a differentiating stage connected to the indicator S. This differentiating stage consists of an operational amplifier Opd2 controlled by a resistor Rd2 and a capacitor Cd2.

If substantial variations occur, and notwithstanding the filtering of the voltage measured by the transducer Rx and fed to the indicator S, the operational amplifier Opd2 reduces the duty cycle of the square wave generator Os by in practice increasing the filtering time constant of the electronic circuit 12. In this manner the transfer between the indicator S and the transducer Rx is governed by two time constants, the first for small oscillations (typically 30 seconds) and the second for large oscillations (typically 90 seconds).

In this manner by increasing the filtering properties of the electronic circuit 12, even transducers with low hydraulic damping can be used with good performance.

## Claims

1. An electronic damping device for an apparatus for indicating the fuel level in a vehicle tank, consisting of an electrical level transducer (Rx) located in said fuel-containing vehicle tank, an indicator device (S) controlled by an electrical voltage and an electronic circuit (12) comprising an input towards said transducer and an output towards said indicator device, wherein said electronic circuit (12) comprises a first static switch (Int-1) connected in series between said input and said output, a second static switch (Int-2) which connects to said input a resistive-capacitive network (RC) consisting of a resistor (R) and a capacitor (C) connected in series, a third static switch (Int-3) which connects said capacitor (C) to said output via an adaptive node (Op), and a square wave generator (Os) with an ON period which is short relative to its OFF period, said square wave generator (Os) being connected to the control electrodes of said static switches (Int-1, Int-2, Int-3) in such a manner as to close said first and said second static switch (Int-1, Int-2) and to open said third static switch (Int-3) during the ON stage and, complementarily, to open said first and said second static switch (Int-1, Int-2) and to close said third static switch (Int-3) during the OFF stage.

2. A device as claimed in claim 1, characterised in that said electronic circuit (12) comprises a differentiating stage (Opd, Cd, Rd) controlled by said transducer (Rx) via a fourth static switch (Int-4) and connected to the control electrode of said fourth static switch (Int-4) in such a manner as to close said fourth static switch (Int-4) during the ON stage and, complementarily, to open said fourth static switch (Int-4) during the OFF stage, said differentiating stage comprising a capacitor (Cd) and a resistor (Rd).

3. A device as claimed in claim 1, characterised in that a contact (W), activated when the fuel level in said tank falls below a predetermined reserve level, is connected to the node of a resistive voltage divider (R1, R2), said resistive voltage divider (R1, R2) being connected to one of the two inputs of a comparator (Oc) via a fifth static switch (Int-5) and a resistive-capacitive network (Rw, Cw), said square wave generator (Os) being connected to the control electrode of said fifth static switch (Int-5) in such a manner as to close said fifth static switch (Int-5) during the ON stage and, complementarily, to open said fifth static switch (Int-5) during the OFF stage, the other input of said comparator (Oc) being connected to a reference voltage (Vref), and the output of said comparator (Oc) controlling the lighting of a warning lamp (L).

4. A device as claimed in claim 3, characterised in that said electronic circuit (12) comprises a combining circuit (CC) with two inputs and one output, one of said two inputs of the combining circuit (CC) being connected to said warning lamp (L) and the other of said two inputs being connected to the node of said resistive voltage divider (R1, R2), the output of said combining circuit (CC) being connected to said indicator device (2) via a second diode (D2) and a resistor (R3), said combining circuit (CC) performing the logic function of preventing said indicator device (S) from reaching its lower end-of-scale position if said warning lamp (L) is not lit.

5. A device as claimed in claim 1, characterised in that said square wave generator (Os) is controlled with feedback by a differentiating stage (Opd2, Rd2, Cd2) connected to said indicator device (S) in such a manner as to reduce the duty cycle of the generated square wave when the voltage provided by said electrical level transducer (Rx) varies.

## Patentansprüche

1. Elektronische Dämpfungseinrichtung für eine Vorrichtung zur Anzeige des Flüssigkeitsstandes in einem Fahrzeugtank, bestehend aus einem in dem Treibstoff enthaltenden Fahrzeugtank angeordneten elektrischen Füllstandswandler (Rx), einer durch eine elektrische Spannung gesteuerten Anzeigeeinrichtung (S) und einer elektronischen Schaltung (12) mit einem Eingang zu dem Wandler und einem Ausgang zu der Anzeigeeinrichtung, wobei die elektronische Schaltung (12) aufweist einen ersten statischen Schalter (Int-1), der in Serie zwischen den Eingang und Ausgang geschaltet ist, einen zweiten statischen Schalter (Int-2), der den Eingang mit einem aus der Serienschaltung eines Widerstandes (R) und eines Kondensators (C) bestehenden Widerstands-Kapazitätsglied (RC) verbindet, einem dritten statischen Schalter (Int-3), der den Kondensator (C) mit dem Ausgang über ein adaptives Glied (Op) verbindet, und einen Rechteckwellengenerator (Os), dessen EIN-Periode kurz im Vergleich zur AUS-Periode ist, wobei der Rechteckwellengenerator (Os) mit den Steuerelektroden der statischen Schalter (Int-1, Int-2, Int-3) derart verbunden ist, daß er im EIN-Zustand den ersten und zweiten statischen Schalter (Int-1, Int-2) schließt und den dritten statischen Schalter (Int-3) öffnet und, komplementär, im AUS-Zustand den ersten und zweiten statischen Schalter (Int-1, Int-2) öffnet und den dritten statischen Schalter (Int-3) schließt.

2. Einrichtung nach Anspruch 1, dadurch **gekennzeichnet,** daß die elektronische Schaltung (12) eine Differenzierstufe (Opd, Cd, Rd) aufweist, die von dem Wandler (Rx) über einen vierten statischen Schalter (Int-4) gesteuert wird und mit der Steuerelektrode des vierten statischen Schalters (Int-4) derart verbunden ist, daß sie den vierten statischen Schalter (Int-4) während des EIN-Zustandes schließt und, komplementär, den vierten statischen Schalter (Int-4) während des AUS-Zustandes öffnet, wobei die Differenzierstufe einen Kondensator (Cd) und einen Widerstand (Rd) aufweist.

3. Einrichtung nach Anspruch 1, dadurch **gekennzeichnet,** daß ein Kontakt (W), der betätigt wird, wenn der Füllstand in dem Tank unter ein vorgegebenes Niveau fällt, mit dem Zwischenpunkt eines Widerstands-Spannungsteilers (R1,R2) verbunden ist, wobei der Widerstands-Spannungsteiler (R1,R2) mit einem von zwei Eingängen eines Komparators (Oc) über einen fünften statischen Schalter (Int-5) und ein Widerstands-Kapazitätsglied (Rw,Cw) verbunden ist, wobei der Rechteckwellengenerator (Os) mit der Steuerelektrode des fünften statischen Schalters (Int-5) derart verbunden ist, daß er den fünften statischen Schalter (Int-5) während des EIN-Zustandes schließt und, komplementär, den fünften statischen Schalter (Int-5) während des AUS-Zustandes öffnet, wobei der andere Eingang des Komparators (Oc) mit einer Bezugsspannung (Vref) verbunden ist und der Ausgang des Komparators (Oc) das Aufleuchten einer Warnlampe (L) steuert.

4. Einrichtung nach Anspruch 3, dadurch **gekennzeichnet,** daß die elektronische Schaltung (12) eine Verknüpfungsschaltung (CC) mit zwei Eingängen und einem Ausgang aufweist, wobei einer der beiden Eingänge der Verknüpfungsschaltung (CC) mit der Warnlampe (11) und der andere der beiden Eingänge mit dem Zwischenpunkt des Widerstands-Spannungsteilers (R1,R2) verbunden ist, der Ausgang der Verknüpfungsschaltung (CC) mit der Anzeigeeinrichtung (2) über eine zweite Diode (D2) und einen Widerstand (R3) verbunden ist, und die Verknüpfungsschaltung (CC) die Logikfunktion durchführt, um zu verhindern, daß die Anzeigeeinrichtung (S) ihre untere Bereichsendposition erreicht, wenn die Warnlampe (L) nicht leuchtet.

5. Einrichtung nach Anspruch 1, dadurch **gekennzeichnet,** daß der Rechteckwellengenerator (Os) mit Rückkopplung durch eine Differenzierstufe (Opd2, Rd2, Cd2) gesteuert ist, die mit der Anzeigeeinrichtung (S) derart verbunden ist, daß sie das Tastverhältnis der erzeugten Rechteckwelle verringert, wenn die von dem elektrischen Füllstandswandler (Rx) gelieferte Spannung sich ändert.

## Revendications

1. Dispositif d'amortissement électronique pour un appareil destiné à indiquer le niveau de carburant dans un réservoir de véhicule, constitué par un transducteur de niveau électrique (Rx) situé dans un réservoir de véhicule contenant du carburant, un dispositif indicateur (S) commandé par une tension électrique et un circuit électronique (12) comprenant une entrée en direction du transducteur et une sortie en direction du dispositif indicateur, dans lequel le circuit électronique (12) comprend un premier commutateur statique (Int-1) monté en série entre l'entrée et la sortie, un second commutateur statique (Int-2) qui relie à cette entrée un réseau capacitif résistif (RC) constitué par un résisteur (R) et un capaciteur (C) montés en série, un troisième commutateur statique (Int-3) qui relie le capaciteur (C) à la sortie par le biais d'un point nodal d'adaptation (Op) et un générateur d'ondes carrées (Os) avec une période MARCHE qui est courte par rapport à sa période ARRET, ce générateur d'ondes carrées (Os) étant relié aux électrodes de commande des commutateurs statiques (Int-1, Int-2, Int-3) de façon à fermer les premier et second commutateurs statiques (Int-1, Int-2) et ouvrir le troisième commutateur statique (Int-3) pendant le mode MARCHE et, de façon complémentaire, pour ouvrir les premier et second commutateurs statiques (Int-1, Int-2) et pour fermer le troisième commutateur statique (Int-3) pendant le mode ARRET.

2. Dispositif selon la revendication 1, caractérisé en ce que le circuit électronique (12) comprend un étage de différenciation (Opd, Cd, Rd) commandé par le transducteur (Rx) par le biais d'un quatrième commutateur statique (Int-4) et relié à l'électrode de commande du quatrième commutateur statique (Int-4) de façon à fermer le quatrième commutateur statique (Int-4) pendant le mode MARCHE et, complémentairement, pour ouvrir le quatrième commutateur statique (Int-4) pendant le mode ARRET, cet étage de différenciation comprenant un capaciteur (Cd) et un résisteur (Rd).

3. Dispositif selon la revendication 1, caractérisé en ce qu'un contact (W), activé lorsque le niveau de carburant dans le réservoir descend au dessous d'un niveau de réserve prédéterminé, est relié au point nodal d'un diviseur de tension résistive (R1, R2), ce diviseur de tension résistive (R1, R2) étant raccordé à l'une des deux entrées d'un comparateur (Oc) par le biais d'un cinquième commutateur statique (Int-5) et d'un réseau capacitif résistif (Rw, Cw), le générateur d'ondes carrées (Os) étant connecté à la première électrode de commande du cinquième commutateur statique (Int-5) de façon à fermer le cinquième commutateur statique (Int-5) pendant le mode MARCHE et, de façon complémentaire, pour ouvrir le cinquième commutateur statique (Int-5) pendant le mode ARRET, l'autre entrée du comparateur (Oc) étant connectée à une tension de référence (Vref), et la sortie du comparateur (Oc) commandant l'allumage d'un voyant alarme (L).

4. Dispositif selon la revendication 3, caractérisé en ce que le circuit électronique (12) comprend un circuit de combinaison (CC) avec deux entrées et une sortie, l'une des deux entrées du circuit de combinaison (CC) étant connectée au voyant d'alarme (L) et l'autre entrée des deux entrées étant connectée au point nodal du diviseur de tension résistive (R1, R2), la sortie du circuit de combinaison (CC) étant connectée au dispositif indicateur (2) par le biais d'une seconde électrode (D2) et d'un résisteur (R3), ce circuit de combinaison (CC) effectuant la fonction logique consistant à empêcher le dispositif indicateur (S) d'atteindre sa position inférieure d'extrémité de cadran si le voyant alarme (L) n'est pas allumé.

5. Dispositif selon la revendication 1, caractérisé en ce que le générateur d'ondes carrées (Os) est commandé en rétroaction par un étage de différenciation (Opd2, Rd2, Cd2) connecté au dispositif indicateur (S) de façon à réduire le cycle de service de l'onde carrée produite lorsque la tension fournie par le transducteur de niveau électrique varie.
